(19) Europäisches Patentamt
European Patent Office
Office européen des brevets

(11) Veröffentlichungsnummer : **0 391 191 B1**

(12) # EUROPÄISCHE PATENTSCHRIFT

(45) Veröffentlichungstag der Patentschrift : **01.09.93 Patentblatt 93/35**

(51) Int. Cl.$^5$ : **C08F 8/00**

(21) Anmeldenummer : **90105660.6**

(22) Anmeldetag : **24.03.90**

(54) **Poly(meth) acrylate mit aufgepfropften Polycarbonatketten, ihre Herstellung und Verwendung.**

(30) Priorität : **07.04.89 DE 3911222**

(43) Veröffentlichungstag der Anmeldung : **10.10.90 Patentblatt 90/41**

(45) Bekanntmachung des Hinweises auf die Patenterteilung : **01.09.93 Patentblatt 93/35**

(84) Benannte Vertragsstaaten : **DE ES FR GB IT NL**

(56) Entgegenhaltungen :
**EP-A- 0 292 785**
**DE-A- 1 770 144**
**DE-A- 2 019 994**
**US-A- 3 431 224**

(56) Entgegenhaltungen :
**DIE ANGEWANDTE MAKROMOLEKULAIRE CHEMIE, Band 60/61, Nr. 861, April 1977, Seiten 125-137; D. MARGOTTE et al.: "Polycarbonat-gepfropfte Polyvinylverbindungen"**

(73) Patentinhaber : **BAYER AG**
**D-51368 Leverkusen (DE)**

(72) Erfinder : **Dujardin, Ralf, Dr.**
**Bodelschwinghstrasse 18**
**D-4150 Krefeld 1 (DE)**
Erfinder : **Morbitzer, Leo, Dr.**
**Rungestrasse 50**
**D-5000 Köln 80 (DE)**
Erfinder : **Dhein, Rolf, Dr.**
**Deswatinesstrasse 30**
**D-4150 Krefeld 1 (DE)**
Erfinder : **Nouvertné, Werner, Dr.**
**Burgstrasse 17b**
**D-4150 Krefeld 11 (DE)**

EP 0 391 191 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von Vinylcopolymerisaten mit aufgepfropften Polycarbonatketten, deren Vinylcopolymerisatpfropfgrundlage ein Mn (Zahlungsmittelmolekulargewicht, ermittelt durch Gelpermeationschromatographie) von 10.000 bis 40.000 hat, deren Polycarbonatketten einen Polykondensationsgrad an wiederkehrenden Carbonatstrktureinheiten von 35 bis 70 haben und die ein Gewichtsverhältnis von Vinylcopolymerisatpfropfgrundlage zu aufgepfropften Polycarbonatketten zwischen 35 Gew.% zu 65 Gew.% und 55 Gew.-% zu 45 Gew.% haben, das dadurch gekennzeichnet ist, daß man 95 Mol% bis 99,5 Mol% an (Meth)arcylsäurestern und 5 Mol% bis 0,5 Mol% an Verbindungen der Formel (I)

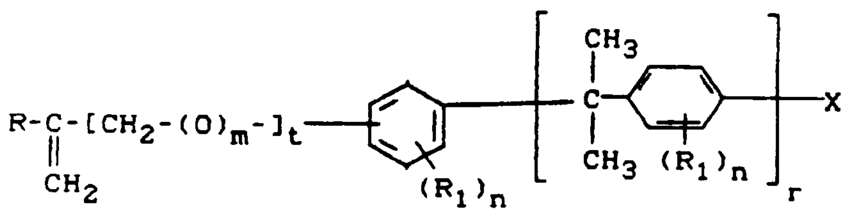

(I)

worin
R = H oder $C_1$-$C_4$-Alkyl,
$R^1$ = Cl, Br, $C_1$-$C_4$-Alkyl, Cylcohexyl oder $C_1$-$C_4$-Alkoxy,
m = 0 oder 1,
n = 0, 1 oder 2,
r = 0 oder 1,
t = 0 oder 1 und
X = - O-$Si(CH_3)_3$ sind,
durch radikalisch initiierte Polymerisation bis zu einem gewünschten Molekulargewicht (Mn, Zahlenmittelmolekulargewicht) zwischen 10.000 und 40.000 nach bekannten Verfahren copolymersiert und danach das Polymerisat ohne Isolierung mit Diphenolen, Phosgen und Monophenolen in wäßrig-alkalischer Phase unter Zusatz eines inerten organischen Lösungsmittels unter den Bedingungen des Zweiphasengrenzflächenverfahrens umsetzt, wobei die Menge an Diphenol so gewählt ist, daß der Gehalt an Polycarbonatketten im gepfropften Vinylcopolymerisat zwischen 65% und 45 Gew.%, bezogen auf das Gesamtgewicht des gepfropften Vinylcopolymerisats inklusive aufgepfropften Polycarbonatketten, beträgt, wobei die Menge an Kettenabbrecher so bemessen ist, daß die mittlere Kettenlänge der aufgepfropften Polycarbonatseitenketen jeweils zwischen 35 und 70 wiederkehrende Carbonatstruktureinheiten aufweist, und wobei die Menge an inerten organischen Lösungsmittel so bemessen sein muß, das die Endviskosität der organischen Phase der Reaktionsmischung zwischen 5 und 25 mPa.s, vorzugsweise zwischen 10 und 20 mPa.s liegt.

Als Endviskosität ist die mit einem Höppler-Viskosimeter bestimmte absolute Viskosität der organischen Phase des Reaktionsgemisches nach abgeschlossener Polykondensation bei 20° C zu verstehen.

Gegenstand der vorliegenden Erfindung sind außerdem die nach dem erfindungsgemäßen Verfahren erhältlichen gepfropften Vinylcopolymerisate.

Aus der DE-A 1-153 527 ist ein Verfahren zur Herstellung von Mischpolymerisaten mit Phenolresten als Seitenketten aus ungesättigten Phenolen und anderen olefinischen Verbindungen bekannt. Die Mischpolymerisation erfolgt in Gegenwart von Lewissäuren oder ähnlich wirkenden Säuren, ist somit ionisch katalysiert. Die erhaltenen Produkte haben Durchschnittsmolekulargewichte zwischen etwa 500 und 2000.

Aus der DE-A 1 770 144 bzw. der DE-A 1 795 840 bzw. dem US-A- 3 687 895 ist ebenfalls die Herstellung von entsprechenden Vinylmischpolymerisaten bekannt. Die Copolymerisation kann sowohl ionisch als auch radikalisch katalysiert werden (Seite 4 der DE-A- 1 770 144).

Die Molekulargewichte (Zahlenmittel) Mn können gemäß Formel II von Seite 3 der DE-A 1 770 144 zwischen etwa 3000 (1=5 und r'=5) und etwa 20 000 000 (1=200 und r=1000) liegen, jedoch wird in Beispiel $M_1$, dem einzigen Beispiel mit einem Methylmethacrylatester, ein Mn (Zahlenmittelmolekulargewicht) von 52 000 erreicht (siehe dazu die berichtigte DE-A 1 770 144, Spalte 7). Darüber hinaus erreichen die aufgepfropften Polycarbonatketten in dem entsprechenden Beispiel 11 der DE-A 1 770 144 nur einen Polymerisationsgrad von 16,2, während gemäß Formel I der DE-A 1 770 144 ein Polymerisationsgrad von 5 bis 100 möglich ist.

Mit anderen Worten, die gepfropften Vinylcopolymerisate gemäß vorliegender Erfindung fallen zwar unter die allgemeine Formel der DE-A 1 770 144 bzw. des US-A- 3 687 895, aber nie werden die geforderten Kriterien, nämlich Mn der Pfropfgrundlage von 10.000 bis 40.000, wiederkehrende Carbonatstruktureinheiten von 35 bis 70 in den Seitenketten und Gewichtsverhältnisse von Polycarbonatketten zu Pfopfgrundlage zwischen 65 Gew.% zu 35 Gew.% und 45 Gew.% zu 55 Gew.% in der Patentschrift zusammen konkret offenbart. Immer ist mindestens eines dieser Kriterien nicht erfüllt.

Aus dem US-A 3 856 886 sind ebenfalls entsprechende Vinylcopolymerisate mit mittleren Molekulargewichten Mn (Zahlenmittel) von 10.000 bis 200.000, vorzugsweise von 20.000 bis 50.000 (Spalte 2, Zeilen 10 bis 16 der US-A- 3 856 886) bekannt. Auf diese Vinylcopoymerisate werden ebenfalls Polycabonate aufgepfropft, wobei auf die bereits zitierte US-A 3 687 895 verwiesen wird.

Wiederum sind die gepfropften Vinylcopolymerisate gemäß vorliegender Erfindung unter der allgemeinen Formel des US-A 3 856 886 subsummiert, aber nie sind die geforderten Kriterien in der Patentschrift zusammen konkret offenbart. Immer ist mindestens eines dieser Kriteien nicht erfüllt.

In dem US-A 3 856 886 werden gepfropften Vinylcopolymerisate mit Vinylpolymerisaten und/oder thermoplastischen Polycarbonaten abgemischt.

Aus den Beispielen 8 bis 15 dieses US-Patents ergibt sich nun, daß für die Abmischungen mit thermoplastischen Polycarbonaten die Pfropfgrundlage des gepfropften Vinylpolymerisats zwischen 10 und 30 Gew.% liegt.

Die Abmischungen der gepfropften Vinylcopolymerisate mit thermoplastischen Polycarbonaten haben eine verbesserte Alkali- und Heißwasserbeständigkeit, außerdem verbesserte mechanische Eigenschaften und zeigen keine Unverträglichkeitserscheinungen (Spalte 6, Zeilen 47 bis 61 von US-A 3 856 886 sowie Seiten 3/4 der DE-A- 2 019 994.

Aus der DE-A 1 950 982 bzw. dem US-A 3 758 597 sind schließlich auch Mischpolymerisate mit Phenolresten als Seitenketten bekannt; über die Molekulargewichte dieser Vinylcopolymerisatpfropfgrundlagen sind keine Angaben gemacht. Es ist außderdem die Aufpfropfung mit Polycarbonatketten beschrieben, wobei der Gehalt an Pfropfgrundlage im gepfropften Produkt des einzigen Ausführungsbeispiels 5 Gew.% beträgt.

Aus der DE-A 2 357 192 bzw. dem entsprechenden US-A- 3 991 009 sind ebenfalls entsprechende gepfropfte Vinylcopolymerisate bekannt. Die ungepfropften Copolymerisate sollen ein Molekulargewicht (Mw, dadurch Osmose ermittelt) von 10.000 bis 100.000, vorzugsweise von 10.000 bis 40.000, haben. Die in den Beispielen beschriebenen gepfropften Vinylcopolymerisate haben einen Anteil von 10 Gew.% bzw. 20 Gew.% an Coplymerisatgrundlage.

Schließlich sind polycarbonatgepfropfte Polyvinylverbindungen noch in "Angewandte Makromolekulare Chemie 60/61 (1977), Seiten 125 bis 137 (Nr. 861) beschrieben. Jedoch ist auch hier das Mn der Pfropfgrundlage nur zwischen 2.000 und 4.000 und der Anteil an Pfropfgrundlage im gepfropften Vinylpolymerisat maximal 20 Gew.%.

Ein Nachteil derartiger Formmassen ist jedoch die unzureichende Beständigkeit gegen Kraftstoffe (Benzin) oder andere organische Solventien.

Um Beständigkeit gegen Benzin und gute Kerbschlagzähigkeit von Polycarbonatformmassen zu erhalten, werden spezielle Blockcopolymere (Kraton®G) und entweder Copolymere aus Olefinen mit Acrylaten (siehe EP-A- 0 119 533) oder mit core-shell-Pfropfcopolymeren (siehe EP-A 0 173 358) eingesetzt.

Für Mischungen aus Copolyestercarbonaten mit Polycarbonaten dient ebenfalls eine Kombination aus dem erwähnten speziellen Blockcopolymer mit Olefin-Acrylat-Copolymeren oder Olefin-Dien-Terpolymeren (siehe EP-A 0 186 825). Der Zusatz der speziellen Blockcopolymeren kann jedoch zu Störungen in der Qualität der Formmassen wie Delamination und verschlechterter Tieftemperaturzähigkeit führen.

Ein anderer Weg, Polycarbonatformmassen mit guter Schlagzähigkeit und Oberflächenresistenz gegen Benzin und andere Kraftstoffe herzustellen, besteht in der Kombination der Polycarbonate mit Polyalkylenterephthalaten, denen Polymerisate zugesetzt werden (siehe DE-A 3 302 124, S. 27, Absatz 3 und EP- A 0 131 196 S. 12, letzter Absatz), wobei durch Zusatz von Nitrilkautschuken zu Polycarbonaten gemäß EP-A- 0 131 196 auch ohne Polyesterzusatz die Benzinbeständigkeit verbessert wird.

Demgegenüber wurde nun gefunden, daß die nach dem erfindungsgemäßen Verfahren erhältichen gepfropften Vinylpolymerisate, deren Pfropfgrundlage ein Mn von 10.000 bis 40.000 hat, vorzugsweise von 12.000 bis 35.000, und einen Anteil von 0,5-1 Mol% an Verbindungen der allgemeinen Formel I hat, deren Gehalt an Pfropfgrundlage zwischen 35 Gew.% und 65 Gew.%, bezogen auf das Gesamtgewicht an gepfropften Vinylcopolymerisat inklusive aufgepfropften Polycarbonatketten, beträgt und deren Polycarbonatketten eine Polykondendationsgrad an wiederkehrenden Carbonatstruktureinheiten von 35 bis 70 ausgezeichnete Additive zur Verbesserung der Benzinbeständigkeit von Polycarbonat sind, während bei Gehalten von 1-5 Mol% an Verbindungen der allgemeinen Formel I hervorragende Schlagzähmodifikatoren für Polycarbonat entstehen.

Für den Fachmann lag es nicht nahe, daß die erfindungsgemäßen Pfropfcopolymeren lediglich durch Variation des gleichbleibenden Gewichtsverhältnisses zwischen Pfropfgrundlage und Polycarbonatseitenästen entweder gute Benzinbeständigkeit oder gute Tieftemperaturzähigkeit in Polycarbonat induzieren.

Aus der DE-A 3 717 172 sind Vinylcopolymerisate mit aufgepfropften Polycarbonatketten bekannt, die als Pfropfgrundlage Polystyrole haben und die Mischungen von Polycarbonaten mit Polystyrolen verträglicher machen.

Aus der EP-A 0 293 908 sind Pfropfcopolymere von Styrolharzen und aromatischen Polycarbonaten bekannt, die insbesondere für optische Gegenstände geeignet sind.

Gegenstand der vorliegenden Erfindung ist somit auch die Verwendung der nach dem erfindungsgemäßen Verfahren erhältlichen gepfropften Vinylcopolymerisate als Modifikatoren für thermoplastische Polycarbonate.

Es ist bekannt, daß hochmolekulare Polycarbonate bis zu einer kritischen Dicke von 6,35 mm eine ausgezeichnete Schlagzähigkeit aufweisen. Oberhalb dieser Grenze ist ihre Schlagzähigkeit gering. Zudem sinkt die Schlagzähigkeit der Polycarbonatharze mit abnehmender Temperatur schnell ab und ebenso bei erhöhten Temperaturen.

Die Verbesserung der Schlagzähigkeit von Polycarbonatharzen bei niedriger Temperatur und bei Raumtemperatur, im weiteren Text als Tieftemperaturzähigkeit bezeichnet, erfolgt durch Verwendung von sog. Impact-Modifier. Dazu gehören Polyolefine (US-A 3 431 224), Butadien enthaltende Polymere (US-A 3 880 783) und Acrylat enthaltende Polymere (US-A 4 299 928).

Die bevorzugten Acrylatpolymere sind multiphasige Systeme, die aus einer gummiartigen ersten Phase (core) und einer anschließenden thermoplastischen, harten Phase (shell)aufgebaut sind.

So wird z.B in der EP A 036 127 (Mo 2062) die verbesserte Schlagzähigkeit von Polycarbonat durch Verwendung eines mehrphasigen core-shell-Polymeren auf Basis einer elastomeren Phase aus einem $C_1$-$C_5$-Alkylacrylat-Polymeren, z.B. Butylacrylat, die mit einem bifunktionellen Acrylatmonomeren vernetzt wurde und die nach Behandlung mit einem pfropfenden Monomeren in die Synthese der thermoplastischen, harten Phase, bestehend aus Methylmethacrylat, eingesetzt wurde, in Mengen von 1-20 Gew.-% erreicht.

Gegenstand der vorliegenden Erfindung sind außerdem Mischungen enthaltend thermoplastische Polycarbonate und die erfindungsgemäß gepfropften Vinylcopolymerisate. Diese eignen sich zur Herstellung benzinbeständiger und/oder tieftemperaturschlagzäher Polycarbonatformmassen.

Gegenstand der vorliegenden Erfindung sind außerdem Mischungen, enthaltend A) 99,5 bis 70 Gew.-%, vorzugsweise 99 bis 88 Gew.-% und insbesondere 98 bis 91 Gew.-%, eines thermoplastischen, aromatischen Polycarbonats auf Basis von Diphenolen der Formel (II)

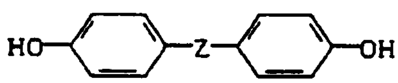

(II)

worin Z eine Einfachbindung, ein Alkylenrest mit 1 bis 8 C-Atomen, ein Alkylidenrest mit 2 bis 12 C-Atomen, ein Cyclohexylidenrest, ein 3,3,5-Trimethylcyclohexyliden-Rest gemäß DE-A- 3 832 396.6, ein Benzylidenrest, ein Methylbenzylidenrest, ein Bis-(phenyl)-methylenrest, -S-, $-SO_2-$, -CO- oder -O- ist, mit Mw (Gewichtsmittelmolekulargewichten, ermittelt in bekannter Weise über die relative Lösungsviskosität) zwischen 15.000 und 120.000, vorzugsweise zwischen 20.000 und 80.000 und insbesondere zwischen 25.000 und 45.000, und B) 0,5 Gew.-% bis 30 Gew.-%, vorzugsweise 1,0 Gew.-% bis 12 Gew.-% und insbesondere 2 Gew.-% bis 9 Gew.-%, bezogen auf jeweils 100 Gew.-% aus A) + B), an erfindungsgemäß erhältlichem, gepropftem Vinylcopolymerisat, wobei die Menge an gepfropften Vinylcopolymerisat auch die Summe der Menge aus zwei Vinylcopolymerisaten unterschiedlichen Gehalts an Verbindungen der allgemeinen Formel (I) sein kann.

Die zur Herstellung der erfindungsgemäßen gepfropften Vinylcopolymerisate gemäß Komponente B) erforderlichen Verbindungen der Formel (I) sind entweder bekannt oder nach bekannten Verfahren herstellbar (siehe beispielsweise H. Niederprüm, P. Voss, V. Beyl, Liebigs Ann., 1973, 20-32 und Japan Kkai Tokyo Koko 79/122 257).

Beispiele für solche Verbindungen sind beispielsweise 3-Trimethylsiloxystyrol, 4-Trimethylsiloxystyrol, 3-Trimethylsilyloxy-$\alpha$-methylstyrol, 4-Trimethylsiloxy-$\alpha$-methylstyrol, 2-Methyl-4'-trimethylsiloxystyrol, 2-Methyl-4-trimethylsilox-$\alpha$-methylstyrol, 2,6-Dichlor-4-trimethylsiloxy-$\alpha$-methylstyrol, 3-Trimethylsiloxy-allylbenzol, 4-Trimethylsiloxy-allylbenzol und 4-Trimethylsiloyphenyl-allylether.

Eine Möglichkeit zur Herstellung der Verbindungen der Formel (I) besteht darin, daß man die entsprechenden Phenole (Ia), welche den Verbindungen der Formel (I) entsprechen, worin jedoch X=OH ist, mit Hexamethyldisilazan bei 152° C umsetzt (H. Niederprüm, P. Voss, V. Beyl, Liebigs Ann., 1973, 20-32).

Die Herstellung der Pfropfgrundlagen aus 95-99,5 Mol% (Meth)-acrylsäureester und 0,5-5 Mol% Verbindungen der allgemeinen Formel (I) erfolgt durch radikalische Lösungspolymerisation nach bekannten Verfahren (G. Markert, in Houben-Weyl, Methoden der org. Chemi, S. 1156 ff., Thieme Verlag 1986). Die Auswahl der Lösungsmittel kann nach Literaturdaten erfolgen (O. Fuchs und H.-H. Suhr in J. Brandup u. E.H. Immergut,

Polymer Handbood, S. IV-241 ff., Wiley, New York 1975). Bevorzugt werden i.a. Ester (z.B. Essigsäureethylester), Aromaten (z.B. Toluol) und Ketone (z.B. Butanon). Besonders bevorzugt wird für die Herstellung der vinylcopolymerisatpfopfgrundlagen Chlorbenzol als Lösungsmittel eingesetzt.

Um Polymere mit Molmassen mit Gewichtsmittelwerten zwischen 20.000 und 200.000 zu erzielen, reicht meist die Variation der Monomer- und Initiatorkonzentration aus. Falls dennoch erforderlich, können aliphatische Thiole (z.B. Dodecylmercaptan) mit Übertragungskonstanten von ungefähr 0,5 als Übertragunsregler verwendet werden.

Übliche Initiatoren sind Diacylperoxide (z.B. Dibenzoylperoxid), tert.-Butylester von Percabonsäuren (z.B. Perbenzoesäure) und Derivate der Azo-Bis-isobuttersäure (z.B. Azo-bis-isobuttersäuredinitril).

Die hohen Polymerisationswärmen von (Meth)acrylsäureestern sind durch entsprechende Verdünnung mit Lösungsmitteln, durch Rückflußkühlung oder durch Regelung des Zulaufs zu beherrschen. Besonders bevorzugt für die Herstellung der Pfropfgrundlagen ist das Zulaufverfahren, da die gezielte Beeinflussung der Monomer-und Initiatorkonzentration zu einheitlicheren Produkten bei hohem Endumsatz führt.

Für die Herstellung der Pfropfgrundlagen werden (Meth)acrylsäureester-Monomere vorzugsweise der allgemeinen Formel (III) eingesetzt,

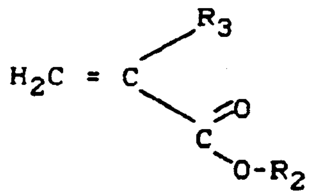

(III)

worin

$R_3$ = Wasserstoff oder Methyl und

$R_2$ = H, $C_1$-$C_{12}$-Alkyl, $C_5$-$C_6$-Cycloalkyl, $C_9$-$C_{15}$-Aralkyl oder $C_9$-$C_{15}$-Alkylaryl ist.

Bevorzugt werden die Acrylsäureester mit $C_4$-$C_8$-Alkylresten eingesetzt.

Geeignete (Meth)acrylate der allgemeinen Formel (III) sind bekannt und kommerziell verfügbar, wie z.B. Ethylacrylat, Propylacrylat, Butylacrylat, 2-Ethylhexylacrylat, Ethylmethacrylat, Butylmethacrylat und 2-Ethylhexylacrylat. Bevorzugt werden Butylacrylat und Butylmethacrylat.

Die Polymerisationszeit richtet sich nach dem Anteil an Comonomeren der Formel (I) und dem angestrebten Molekulargewicht der Vinylcopolymerisatpfropfgrundlage. Bei angestrebtem hohem Molekulargewicht der Pfropfgrundlage und gleichzeiigem hohem Anteil an Verbindungen der Formel (I) ist die Polymerisationszeit entsprechend länger zu wählen als bei einem angestrebten niedrigeren Molekulargewicht der Pfropfgrundlage und/oder bei niedrigem Anteil an Verbindungen der Formel (I).

Die resultierenden, noch ungepfropften Copolymerisate bestehen somit vorzugsweise aus bifunktionellen Struktureinheiten der Formel (IV)

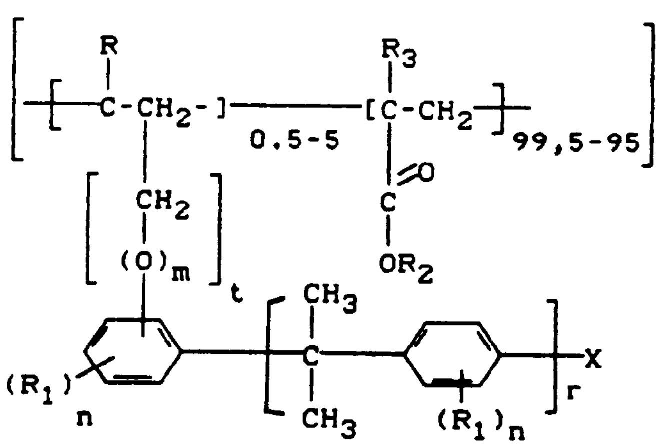

(IV)

worin

R, $R_1$, m, n, r, t und X die für Formel (I) genannte Bedeutung haben, während $R_2$ = H, $C_1$-$X_{12}$-Alkyl, $C_5$-$C_6$-Cycloalkyl, $C_9$-$C_{15}$-Arylalkyl oder $C_9$-$C_{15}$-Alkylaryl bedeutet und $R_3$ H oder Methyl ist.

Die für die Pfropfreaktion geeigneten Diphenole sind die für die bekannte Herstellung von thermoplastischen Polycarbonaten üblichen Diphenole, vorzugsweise solche der Formel (V) HO-D-OH, worin D ein zweibindiger, organischer Rest mit 6 bis 45 C-Atomen ist, und insbesondere solche der Formeln (II) und (IIa), wobei in (IIa) die R's der Si-haltigen Heterosegmente nicht unter der C-Atomzahl von -D-subsummiert sind.

Beispiele für geeignete Diphenole sind beispielsweise 2,2-Bis-(4-hydroxyphenyl)-propan, 1,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan gemäß DE-A 3 832 396 und außerdem Polydialkylsiloxandiphenole, wie sie nachfolgend unter Formel (IIa) aufgeführt sind.

Die Pfropfseitenketten können sowohl ein als auch mehrere Diphenole einkondensiert enthalten, hierbei sei erwähnt, daß die Diphenole der Formel (IIa) in den Seitenketten in einer Menge von maximal 20 Gew.-%, bezogen auf das Gesamtgewicht der Polycarbonatseitenketten, enthalten sind.

Geeignete Monophenole der Kettenabbrecher sind beispielsweise Phenol, p-tert.-Butylphenol, p-Cumylphenol und p-Iso-octylphenol.

Inerte organische Löungsmittel für die Pfropfungsreaktion sind beispielsweise Methylenchlorid und Chlorbenzol.

Die Gewichtsmenge an inertem Lösungsmittel beträgt etwa das 20 - 25fache, bezogen auf die in der Pfropfungsreaktion eingesetzte Gewichtsmenge an Pfopfgrundlage. Die Menge an Lösungsmittel richtet sich nach der jeweils eingesetzten Gewichtsmenge an Pfropfgrundlage im herzustellenden Pfropf; bei geringer Menge an Pfropfgrundlage reicht eine geringer Menge, bei einer höheren Menge an Pfropfgrundlage im Pfropf wird eine größere Menge an Lösungsmittel benötigt. Die Menge an Lösungsmittel ist natürlich so zu wählen, daß die erhaltene Endviskosität in den anfangs erwähnten Bereich fällt.

Als wäßrige alkalische Phase dient beispielsweise wäßrige Natronlauge oder wäßrige Kalilauge.

Geeignete Katalysatoren sind beispielsweise tertiäre Amine, wie z.B. Triethylamin oder N-Ethylpiperidin.

Die resultierenden, gepfropften Copolymerisate enthalten somit vorzugsweise Struktureinheiten der Formel (IVa), welche den Struktureinheiten der Formel (IV) entsprechen, worin jedoch

X = 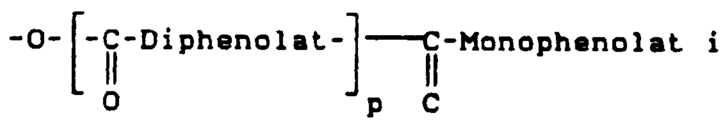 ist,

worin p eine ganze Zahl zwischen 35 und 70 ist und Diphenolat bzw. Monophenolat Reste wie -O-D-O- bzw.

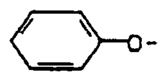

darstellen, welche naturgemäß aus der Umsetzung mit Phosgen in wäßrig alkalischer Phase resultieren, d.h. Reste sind, die durch Abzug der phenolichen H-Atome aus Diphenolen bzw. Monophenolen resultieren.

Die erfindungsgemäße Pfropfreaktion läßt offen, ob all Pfropfstellen X der Pfropfgrundlage (IV) jeweils an der Pfropfraktion partizipieren, gegebenenfalls kann Polycarbonat in untergeordnetem Maße anfallen.

Die als Komponente A) einzusetzenden Polycarbonate sind als solche bekannt oder nach bekannten Verfahren herstellbar, (Siehe bzw. "H. Schnell, Chemistry and Physics of Polycarbonates, Interscience Publishers, New York, 1964), oder Gegenstand der DE-A 38 32 396 und DE-A 38 42 931.4.

Polycarbonate auf Basis der Diphenole der Formel (II) sind solche, die zumindest 80 Gew.-%, bezogen auf die Molsumme der einzusetzenden Diphenole, an Diphenolen der Formel (II) einkondensiert enthalten.

Bevorzugte andere Diphenole, die in Mengen von maximal 20 Gew.-%, bezogen auf die Molsumme der einzusetzenden Diphenole, eingesetzt werden, sind solche der Formel (IIa) (siehe beispielsweise EP-A- 122 535 ).

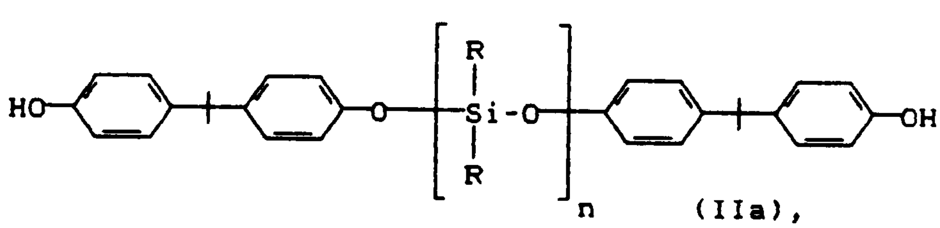

(IIa),

worin
R = $C_1$-$C_4$-Alkyl, vorzugsweise $CH_3$-, und
n = 20 bis 200, vorzugsweise 40 bis 80 sind.

Bevorzugte Diphenole der Formel (II) sind 2,2-Bis-(4-hydroxyphenyl)-propen, 1,1-Bis(4-hydroxyphenyl)-cyclohexan und 1,1-Bis-(4-hydroxyphenyl)-3,3,5-trimethylcyclohexan gemäß DE-A 3 832 396.

Geeignete Diphenole der Formel (IIa) sind beispielsweise solche der Formel (IIb)

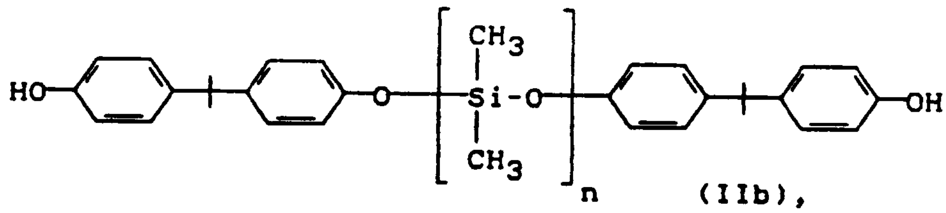
(IIb),

worin
n = 40, 60 oder 80 ist.

Geeignete Kettenabbrecher zur Herstellung der Polycaronate der Komponente A) sind beispielsweise Phenol, p-tert.-Butyphenol und p-Isooctylphenol.

Die Polycarbonate gemäß Komponente A) sind sowohl Homopolycarbonate als auch Copolycarbonate.

Die aromatischen Polycarbonate gemäß Komponente A) können sowohl linar als auch verzweigt sein.

Die Verzweigung kann durch den Einbau geringer Mengen, vorzugsweise zwischen 0,05 und 2,0 Mol-%., bezogen auf eingesetzte Diphenole, an drei- oder mehr als dreifunktionellen Verbindungen, z.B. solchen mit drei oder mehr als drei phenolischen Hydroxygruppen in bekannter Weise erfolgen.

Derartige Polycarbonate sind bekannt. (Siehe beispielsweise DE-A 2 500 092 bzw. US-A- 4 185 009).

Einige der verwendbaren Verbindungen mit drei oder mehr als drei phenolischen Hydroxygruppen sind beispielsweise Phloroglucin, 4,6-Dimethyl-2,4,7-tri-(4-hydroxyphenyl)-heptan, 1,3,5-Tri-(4-hydroxyphenyl)-benzol, 1,1,1-Tri-(4-hydroxyphenyl)-ethan, 2,6-Bis-(2'-hydroxy-5'-methylbenzyl)-4-methylphenol, 2-(4-hydroxyphenyl)-2-(2,4-dihydroxyphenyl)-propan und 1,4-Bis-(4,4'-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Es kann sowohl ein Polycarbonat allein als auch ein Gemisch verschiedener Polycarbonate als Komponente A) fungieren.

Zur Herstellung der erfindungsgemäßen Mischungen können die Polycarbonatkomponente und die Pfropfcopolymerkomponente oberhalb der Erweichungstemperatur der verwendeten Polycarbonatkomponente vermischt werden. Dies kann beispielsweise durch Compoundierung bei der Extrusion in den üblichen Schneckenmaschinen in einem einzigen Arbeitsgang erfolgen und zwar beispielsweise bei Temperaturen zwischen 280 und 350° C. Zur Compoundierung eignen sich bekannte Appataturen. Doppelschneckenextruder werden bevorzugt eingesetzt.

Weiterhin kann die Mischung der Polycarbonate und der erfindungsgemäßen gepfropften Vinylpolymerisate auch über die Lösung und durch anschließendes gemeinsames Ausdampfen über einen Extruder erfolgen.

Gegenstand der vorliegenden Erfindung ist somit außerdem ein Verfahren zur Herstellung der erfindungsgemäßen Mischungen aus thermoplastischen Polycarbonaten und den erfindungsgemäßen gepfropften Vinylcopolymerisaten, das dadurch gekennzeichnet ist, daß man die Polycarbonatkomponente und die Pfropfcopolymerkomponente oberhalb der Erweichungstemperatur der verwendeten Polycarbonatkomponente vermischt, oder Lösungen der Polycarbonatkomponente mit Lösungen der Pfropfcopolymerkomponente vermischt und anschließend das Gemisch durch Ausdampfen in bekannter Weise vom Lösungsmittel befreit.

Ein geeignetes Lösungsmittel für die Polycarbonatkomponente ist beispielsweise $CH_2Cl_2$, für die Pfropfcopolymerkomponente beispielsweise Methylenchlorid oder Chlorbenzol.

Bevorzugte Herstellungsart der Polycarbonat/Pfropfcopolymer-Blends ist das in situ-Verfahren. Dabei wird die für die Generierung des gewünschten Pfropfanteils im Blend notwendige Menge an Pfropfgrundlage aus Struktureinheiten der Formel (IV) in die Polycarbonatsynthese gegeben, wobei die Wirkung des Rückgrats quasi als hochmolekularer Kettenabbrecher rechnerisch berücksicht werden muß. Die auf diese Weise direkt ohne Zwischenisolierung der gepfropften Vinylcopolymerisate und ohne zusätzlichen Compoundierschritt erhaltenen Blends zeigen die gleichen Eigenschaften, wie die durch Schmelz- oder Lösungscompoundierung erhaltenen Blends aus Polycarbonat der Komponente A) und gepfropftem Vinylcopolymerisat mit Struktureín-

heiten der Formel (IVa) gemäß Komponente B) der erfindungsgemäßen Mischungen.

Gegenstand der vorliegenden Erfindung ist somit auch ein Verfahren zur Herstellung der erfindungsgemäßen Mischungen aus den thermoplastischen Polycarbonaten der Komponente A) und den erfindungsgemäßen, gepfropften Vinylcopolymerisaten der Komponente B), das dadurch gekennzeichnet ist, daß man die Herstellung der Polycarbonatkomponente und die Herstellung der Pfropfcopolymerkomponente zusammen nach dem bekannten Phasengrenzflächenverfahren aus Diphenolen, Phosgen und Kettenabbrechern in Anwesenheit der gewünschten Menge an Pfropfgrundlage mit Struktureinheiten der Formel (IV) durchführt, wobei das Molverhältnis von einpolymerisierter Verbindung der Formel (I) in der Pfropfgrundlage (IV) zu monomerem, konventionellem phenolischem Kettenabbrecher so zu wählen ist, daß mindestens 50 % der für die Begrenzung des Polycarbonatkettenwachstums auf 35 bis 70 wiederkehrende Struktureinheiten

$$[-\underset{\underset{O}{\|}}{C}-\text{Diphenolat}-]$$

notwendigen Menge an Kettenabbrecher konventioneller Natur ist.

Die für dieses Verfahren erforderliche Vorabisolierung der ungepropften Copolymerisate mit Struktureinheiten der Formel (IV) erfolgt durch Eindampfen der Reaktionslösung.

Bei Verwendung von Chlorbenzol als Reaktionsmedium für die Herstellung der ungepfropften Copolymerisate mit Struktureinheiten der Formel (IV) können die Reaktionslösungen direkt in die Phasengrenzflächenreaktion eingesetzt werden.

Es ist selbstverständlich, daß im Bedarfsfall bei derartigen Polymermischungen die für Polycarbonat bzw. Poly(meth)acrylate üblichen Stabilisatorsysteme und/oder Entformungsmittel verwendet werden können, die durch Compoundierung, wie oben beschrieben, in bekannter Weise eingearbeitet werden können.

Beispiele für die Herstellung von Pfropfpolymeren

Beispiel 1

a) Pfropfgrundlage

Erhalten durch Copolymerisation von 4190 g Butylacrylat und 32,0 g (0,47 Mol) 4-Trimethylsiloxy-α-mehtylstyrol in Lösung von 10 l Chlorbenzol in Gegenwart von 1 g α,α'-Azodiisobutyronitril unter Stickstoff innerhalb 80 h bei 80 h bei 80° C und Abtrennen des Lösungsmittels durch Destillation im Wasserstrahlvakuum. Das mittlere Molekulargewicht, ermittelt durch Gelpermeationschromatographie, wurde zu Mn=13,389 g/mol bestimmt.

b) Pfropfungsreaktion

Innerhalb von einer Stunde werden bei 20-25° C unter Rühren 1,35 kg (13.5 Mol) Phosgen in ein Gemisch aus 2,28 kg (10 Mol) 2,2-Bis-(4-hydroxyphenyl)-propan (BPA), 45 g (= 3 Mol% bezogen auf BPA) p-tert.-Butylphenol, 4 kg Natronlauge (w=45 %), 40 l Wasser, 12 kg Chlorbenzol und 2000 g (=45 Gew.% bezogen auf Pn von Polycarbonat) der unter a) beschriebenen Pfropfgrundlage (w=100 %) gelöst in 37,2 kg Methylenchlorid eingeleitet. Anschließend werden 14 ml (≙ 1 Mol-% bezogen auf BPA)) N-Ethylpiperidin zugesetzt und 1 h lang nachgerührt. Die org. Phase wird abgetrennt, elektrolytfrei gewaschen und nach Abdestillieren des Methylenchlorids bei 280° C extrudiert. Es wurden 6,2 kg Produkt erhalten mit einer rel. Lösungsviskosität $\eta_{rel}$=1,190. Das berechnete Molekulargewicht der Polycarbonatseitenäste/Pfropfstelle beträgt Mn=14.182 g/mol, was einem Polykondensationsgrad p von 56,73 entspricht.

Beispiel 2

a) Pfropfgrundlage

Erhalten durch Copolymerisation von 4036 g Butylacrylat und 74 g 4-Trimethylsiloxy-α-methylstyrol (1.13 Mol) in Lösung von 10 l Chlorbenzol in Gegenwart von 1 g α,α'-Azodiisobutyronitril unter Stickstoff innerhalb 8 h bei 80° C. Das mittlere Molekulargewicht, ermittelt durch Gelpermeationschromatographie, wurde zu Mn=11.672 g/mol bestimmt.

b) Pfropfungsreaktion

Innerhalb von einer Stunde werden bei 20-25° C unter Rühren 1,35 kg (13.5 Mol) Phosgen in ein Gemisch aus 2,28 kg (10 Mol) 2,2-Bis-(4-hydroxyphenyl)-propan (BPA), 45 g (=3 Mol% bezogen auf BPA) p-tert.-Butylphenol, 4 kg Natronlauge (w=45 %), 40 l Wasser, 12 kg Chlorbenzol und 706,9 g (4 Gew.% bezogen auf Pn von Polycarbonat) der unter a) beschriebenen Pfropfgrundlage (w=29 %), gelöst in 37,2 kg Methylenchlorid, eingeleitet. Anschließend werden 14 ml (=1 Mol% bezogen auf BPA) N-Ethylpiperidin zugesetzt und 1 h lang nachgerührt. Die org. Phase wird abgetrennt, elektrolytfrei gewaschen und nach Abdestillieren des Methylenchlorids bei 28° C extrdiert. Es wurden 4,76 kg Produkt erhalten mit einer rel. Lösungsviskosität $\eta_{rel}$ = 1,326. Das berechnete Molekulargewicht der Polycarbonatseitenäste/Pfropfstelle beträgt Mn = 15.564 g/mol, was einem Polykondensationsgrad p von 56,73 entspricht.

Blendherstellung

Beispiel 3

Gemischt wurden 91,1 Tle. eines Polycarbonats (PC) aus Bisphenol A mit einer rel. Lösungsviskosität $\eta_{rel}$ = 1,290 (gemessen in Methylenchlorid bei 5 g/l bei 25° C) und 8,9 Tle. des Pfropfcopolymeren (entspricht 4 Tle. Butylacrylatrückgrat) aus Beispiel 1 durch Compoundierung in einer ZSK 32 bei 270-290° C.

Beispiel 4

Wie in Beispiel 3, jedoch mit 8,9 Tlen. des Pfropfcopolymeren des Beispiels 2 (entspricht 4 Tlen. Butylacrylatrückgrat).

Beispiel 5

a) Pfropfgrundlage

Erhalten durch Copolymerisation von 838 g Butylacrylat und 6,4 g 4-Trimethylsiloxy-α-methylstyrol (0.47 Mol%) in Lösung von 2 l Chlorbenzol in Gegenwart von 2 g α,α'-Azodiisobutyronitril unter Stickstoff innerhalb 14 h bei 60° C, 8 h bei 80° C, 9 h bei 100° C und 8,5 h bei 120° C.

Das mittlere Molekulargewicht, ermittelt durch Gelpermeationschromatographie, wurde zu Mn = 18 471 g/mol bestimmt.

b) in situ-Blendherstellung

Innerhalb von einer Stunde werden bei 20-25° C unter Rühren 2,7 kg (27 Mol) Phosgen in ein Gemisch aus 4,56 (20 Mol) 2,2-Bis-(4-hydroxyphenyl)-propan (BPA), 102 g (=3,4 Mol% bezogen auf BPA) p-tert.-Butylphenol, 8 kg Natronlauge (w=45 %), 40 l Wasser, 12 kg Chlorbenzol und 1145,95 g (=4 Gew.% bezogen auf Pn von Polycarbonat) der unter a) beschriebenen Pfropfgrundlage (w=18,5 %), gelöst in 37,2 kg Methylenchlorid, eingeleitet. Anschließend werden 28 ml (=1 Mol% bezogen auf BPA) N-Ethylpiperidin zugesetzt und 1 h lang nachgerührt. Die org. Phase wird abgetrennt, elektrolytfrei gewaschen und nach Abdestillieren des Methylenchlorids bei 280° C extrudiert. Es wurden 3,7 kg Produkt erhalten mit einer rel. Lösungsviskosität $\eta_{rel}$ = 1,292. Das berechnete Molekulargewicht der Polycarbonatseitenäste/Pfropfstelle beträgt Mn=13.142 g/mol, was einem Polykondensationsgrad p von 51,74 entspricht.

Beispiel 6

a) Pfropfgrundlage

Erhalten durch Copolymerisation von 2000 g Butylacrylat und 51,2 g 4-Trimethylsiloxy-α-methylstyrol (1.57 Mol%) in Lösung von 2 l Chlorbenzol in Gegenwart von α,α'-Azodiisobutyronitril unter Stickstoff innerhalb 8 h bei 80° C. Das mittlere Molekulargewicht, ermittelt durch Gelpermeationschromatographie, wurde zu Mn = 16.756 g/mol bestimmt.

b) in situ-Blendherstellung

Innerhalb von einer Sunde werden bei 20-25° C unter Rühren 2,7 kg (27 Mol) Phosgen in ein Gemisch aus 4,56 kg (20 Mol) 2,2-Bis-(4-hydroxyphenyl)-propan (BPA), 90 g (=3Mol% bezogen auf BPA) p-tert.-Butylphenol, 8 kg Natronlauge (w=45 %), 40 l Wasser, 12 kg Chlorbenzol und 398 g (=4 Gew.% bezogen auf Pn von Polycarbonat) der unter a) beschriebenen Pfropfgrundlage (w=51,05 %), gelöst in 37,2 kg Methylenchlorid, eingeleitet.

Anschließend werden 28 ml (= 1 Mol-% bezogen auf BPA) N-Ethylpiperidin zugesetzt und 1 Stund lang nachgerührt. Die organische Phase wird abgetrennt, elektrolytfrei gewaschen und nach Abdestillieren des Methylenchlorids bei 280° C extrudiert. Es wurden 4,185 kg Produkt erhalten mit einer rel. Lösungsviskosität $\eta_{rel}$ = 1,336. Das berechnete Molekulargewicht der Polycarbonatseitenäste/Pfropfstelle beträgt Mn=15.714 g/mol, was einem Polykondensationsgrad p von 61,86 entspricht.

Beispiel 7

a) Pfropfgrundlage

Erhalten durch Copolymerisation von 838 g Butylacrylat und 6,4 g 4-Trimethylsiloxy-$\alpha$-methylstyrol (0.47%) in Gegenwart von 2 g $\alpha,\alpha'$-Azodiisobuttersäurenitril, welches innerhalb von 3 h bei 70° C in 2 l Chlorbenzol eingetragen wird sowie 4 h bei 70° C nachreagiert bis sich eine Viskosität (gemessen im Ford-Becher O-Auslauf 4 mm) von 70 Sekunden einstellt. Das mittlere Molekulargewicht, ermittelt durch Gelpermeationschromatographie, wurde zu Mn = 16,608 g/mol bestimmt.

b) in situ-Blendherstellung

Innerhalb von einer Stunde werden bei 20-25° C unter Rühren 2,7 kg (27 Mol) Phosgen in ein Gemisch aus 4,56 (20 Mol) 2,2-Bis-(4-hydroxyphenyl)-propan (BPA), 102,7 g (=3,4 Mol% bezogen auf BPA) p-tert.-Butylphenol, 8 kg Natronlauge (w=45 %) 40 l Wasser, 12 kg Chlorbenzol und 707 g (=4 Gew.% bezogen auf Pn von Polycarbonat) der unter a) beschriebenen Pfropfgrundlage (w=28,7 %), gelöst in 30 kg Methylenchlorid, eingeleitet. Anschließend werden 28 ml (=1 Mol% bezogen auf BPA) N-Ethylpiperidin zugesetzt und 1 h lang nachgeführt. Die org. Phase wird abgetrennt, elektrolytfrei gewaschen und nach Abdestillieren des Methylenchlorids bei 280° C extrudiert. Es wurden 4,36 kg Produkt erhalten mit einer rel. Lösungsviskosität $\eta_{rel}$ = 1,327. Das berechnete Molekulargewicht der Polycarbonatseitenäste/Pfropfstelle beträgt Mn=13.932 g/mol, was einem Polykondensationsgrad p von 54,85 entspricht.

Zur Bestimmung der Benzinbeständigkeit wurden Prüfkörper mit den Maßen 80 mm x 10 mm x 4 mm hergestellt, die auf Biegeschablonen verschiedener Krümmungsradien so eingespannt wurden, daß Randfaserdehnungen $\varepsilon_R$ von 0,3 % bzw. 1,0 % resultieren. Die Schablonen wurden mit aufgebrachter Probe 15 Min. bei 70° C in einem Wärmeschrank (mit Luftdurchwirbelung nach DIN 50 011, 2, 3) gelagert.

Die Schablonen mit den Proben wurden aus dem Schrank entnommen und unmittelbar danach ein Prüfkraftstoffgetränkter Wattebausch aufgelegt. Als Prüfkraftstoff wurde ein Testbenzin nach DIN 51 604 verwendet, das sich aus 50 Vol% Toluol, 30 Vol% Isooctan, 15 Vol% Diisobutylen und 5 Vol% Ethanol zusammensetzt. Nach 15 Min. Einwirkdauer wurde der Wattebausch entfernt und weitere 15 Min. abgewartet, um die Probe ablüften zu lassen.

Anschließend wurden die Prüfkörper mit dem unbewaffneten Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Bestimmung der verbesserten Schlagzähigkeit erfolgte ebenfalls an Prüfkörpern mit den Maßen 80 mm x 10 mm x 4 mm. Die Kerbschlagzähigkeit ($a_k$) wurde nach Izod entsprechend ISO 180/1A durchgeführt. Die Ergebnisse der anwendungstechnischen Prüfungen sind in der folgenden Tabelle zusammengestellt, als Vergleich wurde ein Polycarbonat mit $\eta_{rel}$ = 1,290 $\hat{=}$ einem Pn von 55,5 mitgeprüft.

| Eigenschaft | Schmelzcompoundierung | | | in situ-Blendherstellung | | |
|---|---|---|---|---|---|---|
| $a_k$ (kJ/$m^2$) | PC | Bsp.3 | Bsp.4 | Bsp.5 | Bsp.6 | Bsp. 7 |
| +23° C | 802 | 707 | 748 | 743 | 789 | 657 |
| + 0° C | 348 | 656 | 720 | 743 | 779 | 629 |
| -10° C | 226 | 367 | 706 | 288 | 732 | 309 |
| -20° C | - | 239 | 695 | 217 | 726 | 236 |
| -30° C | - | - | 243 | - | 268 | - |
| -40° C | - | - | - | - | - | - |
| 1. Zyklus | | | | | | |
| E = 0,3 % | 4 | 2 | 2 | 2 | 2 | 2 |
| E = 1,0 % | - | 2 | 4 | 2 | 4 | 2 |
| 2. Zyklus | | | | | | |
| E = 0,3 % | - | 2 | - | 2 | - | 2 |
| E = 1,0 % | - | 2 | - | 2 | - | 4 |

## Patentansprüche

1. Verfahren zur Herstellung von Vinylcopolymerisaten mit aufgepfropften Polycarbonatketten, deren Vinylcopolymerisatpropfgrundlage ein Mn (Zahlenmittelmolekulargewicht, ermittelt durch

Gelpermeationschromatographie) von 10.000 bis 40.000 hat, deren Polycarbonatketten einen Polykondensationsgrad an wiederkehrenden Carbonatstruktureinheiten von 35 bis 70 haben und die ein Gewichtsverhältnis von Vinylcopolymerisatpfropfgrundlage zu aufgepfropften Polycarbonatketten zwischen 35 Gew.% zu 65 Gew.% und 55 Gew.% zu 45 Gew.% haben, das dadurch gekennzeichnet ist, daß man 95 Mol% bis 99,5 Mol% an (Meth)acrylsäureestern und 5 Mol% bis 0,5 Mol% an Verbindungen der Formel (I)

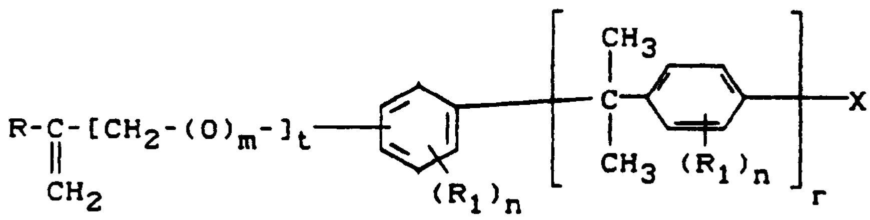

(I)

worin

R = H oder $C_1$-$C_4$-Alkyl,
$R^1$ = Cl, Br, $C_1$-$C_4$-Alkyl, Cylcohexyl oder $C_1$-$C_4$-Alkoxy,
m = 0 oder 1,
n = 0, 1 oder 2,
r = 0 oder 1,
t = 0 oder 1 und
X = - O-Si($CH_3$)$_3$ sind,

durch radikalisch initiierte Polymerisation bis zu einem gewünschten Molekulargewicht (Mn, Zahlenmittelmolekulargewicht) zwischen 10.000 und 40.000 nach bekannten Verfahren copolymersiert und danach das Polymerisat ohne Isolierung mit Diphenolen, Phosgen und Monophenolen in wäßrig-alkalischer Phase unter Zusatz eines inerten org. Lösungsmittels unter den Bedingungen des Zweiphasengrenzflächenverfahrens umsetzt, wobei die Menge an Diphenol so gewählt ist, daß der Gehalt an Polycarbonatketten im gepfropften Vinylcopolymerisat zwischen 65% und 45 Gew.%, bezogen auf das Gesamtgewicht des gepfropften Vinylcopolymerisats incl. aufgepfropften Polycarbonatketten, beträgt und wobei die Menge an Kettenabbrecher so bemessen ist, daß die mittlere Kettenlänge der aufgepfropten Polycarbonatseitenketten jeweils zwischen 35 und 70 wiederkehrende Carbonatstruktureinheiten aufweist und wobei die Menge an inerten organischen Lösungsmitteln so bemessen sein muß, daß die Endviskosität der organischen Phase der Reaktionsmischung zwischen 5 und 25 mPas liegt.

2. Gepfropfte Vinylcopolymerisate, erhältlich nach dem verfahren des Anspruchs 1.

3. Gepfropfte Vinylcopolymerisate gemäß Anspruch 2, dadurch gekennzeichnet, daß sie Struktureinheiten der Formel (IVa) enthalten

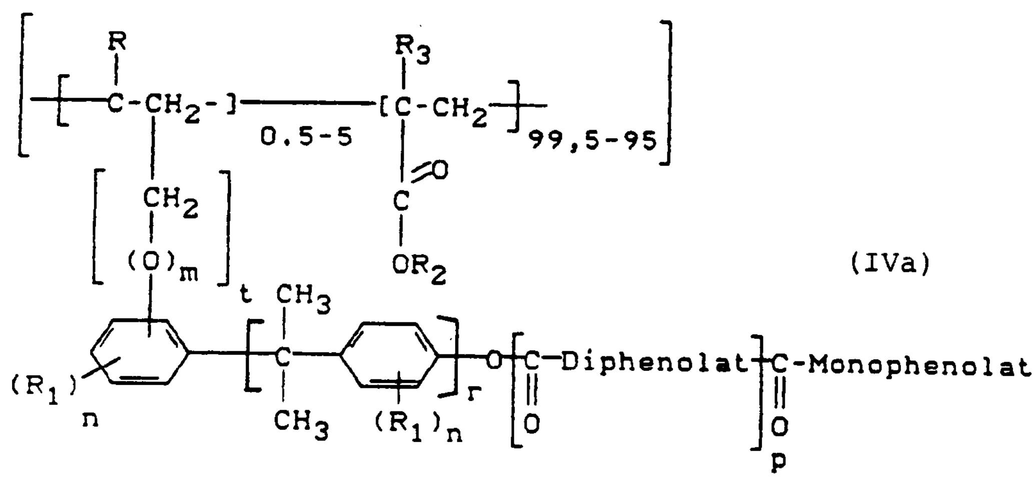

(IVa)

worin R, $R_1$, m, n, r und t die für Formel I im Anspruch 1 genannte Bedeutung haben, p eine ganze Zahl zwischen 35 und 70 ist und Diphenolat und Monophenolat Reste sind, die durch Abzug der phenolischen H-Atome aus Diphenolen bzw. Monophenolen resultieren, und worin $R_2$, H, $C_1$-$C_{12}$-Alkyl, $C_5$-$C_6$-Cycloalkyl, $C_{9}$-$_{15}$-Aralkyl oder $C_9$-$C_{15}$-Alkaryl bedeutet und $R_3$ H oder Methyl ist.

4. Verwendung der gepfropften Vinylcopolymerisate gemäß Ansprüchen 2 und 3 als Modifikatoren für thermoplastische Polycarbonate.

5. Mischungen enthaltend thermoplastische Polycarbonate und die gepfropften Vinylcopolymerisate der Ansprüche 2 und 3.

6. Mischungen enthaltend A) 99,5 bis 70 Gew.% eines thermoplastischen, aromatischen Polycarbonats auf Basis von Diphenolen der Formel (II)

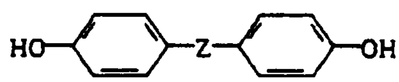

(II)

worin
Z eine Einfachbindung, ein Alkylenrest mit 1 bis 8 C-Atomen, ein Alkylidenrest mit 2 bis 12 C-Atomen, ein Cyclohexylidenrest, ein 3,3,5-Trimethylcyclohexyliden-Rest, ein Benzylidenrest, ein Methylbenzylidenrest, ein Bis-(phenyl)-methylenrest, -S-, $SO_2$, -CO- oder -O-ist, mit Mn (Gewichtmittelmolekulargewichten, ermittelt in bekannter Weise über die relative Lösungsviskosität) zwischen 15.000 und 120.000 und
B) 0,5 Gew.% bis 30 Gew.%, bezogen jeweils auf 100 Gew.% aus A) + B), an erfindungsgemäß erhältlichem, gepfropften Vinylcopolymerisat gemäß Anspruch 2.

7. Verfahren zur Herstellung der Mischungen der Ansprüche 5 und 6, dadurch gekennzeichnet, daß man die Polycarbonatkomponente und die Pfropfcopolymerkomponente oberhalb der Erweichungstemperatur der verwendeten Polycarbonatkomponente vermischt, oder Lösungen der Polycarbonatkomponente mit Lösungen der Pfropfcopolymerkomponente vermischt und anschließend das Gemisch durch Ausdampfen in bekannter Weise vom Lösungsmittel befreit.

8. Verfahren zur Herstellung der Mischungen der Ansprüche 5 und 6, dadurch gekennzeichnet, daß man die Herstellung der Polycarbonatkomponente und die Herstellung der Pfropfcopolymerkomponente zusammen nach dem bekannten Phasengrenzflächen-Verfahren aus Diphenolen, Phosgen und Kettenabbrechern in Anwesenheit der gewünschten Menge an Pfropfgrundlage der Formel (IV) durch führt,

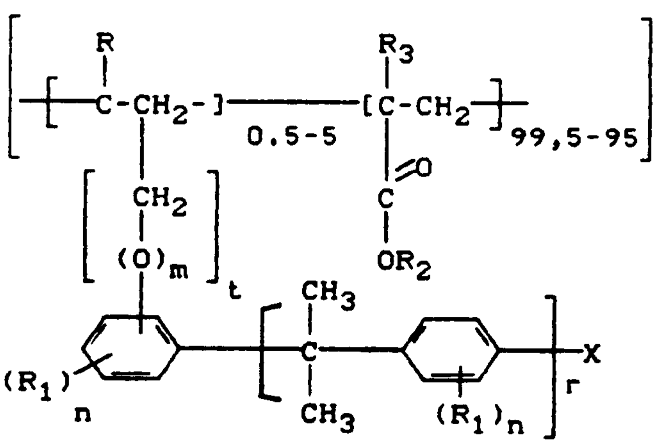

(IV)

worin
R, $R_1$, m, n, r, t und X die für Formel (I) in Anspruch 1 genannte Bedeutung haben, während $R_2$ = H, $C_1$-$C_{12}$-Alkyl, $C_5$-$C_6$-Cycloalkyl, $C_9$-$C_{15}$-Arylalkyl oder $C_9$-$C_{15}$-Alkylaryl bedeutet und $R_3$ H oder Methyl ist, wobei das Molverhältnis von einpolymerisierter Verbindung der Formel (I) in der Pfropfgrundlage (IV) zu monomerem konventionellem phenolischem Kettenabbrecher so zu wählen ist, daß mindestens 50 % der für

die Begrenzung des Polycarbonatkettenwachstums auf 35 bis 70 wiederkehrende Struktureinheiten

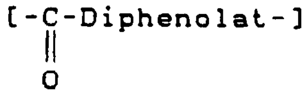

notwendigen Menge an Kettenabbrecher konventioneller Natur ist.

## Claims

1. A process for the production of vinyl copolymers having grafted-on polycarbonate chains, of which the vinyl copolymer graft base has an Mn (number average molecular weight, as determined by gel permeation chromatography) in the range from 10,000 to 40,000, of which the polycarbonate chains have a degree of polycondensation of recurring carbonate structural units of from 35 to 70 and in which the ratio by weight of vinyl copolymer graft base to grafted-on polycarbonate chains is between 35% by weight : 65% by weight and 55% by weight : 45% by weight, characterized in that from 95 mol-% to 99.5 mol-% (meth)acrylates and from 5 mol-% to 0.5 mol-% compounds corresponding to formula (I)

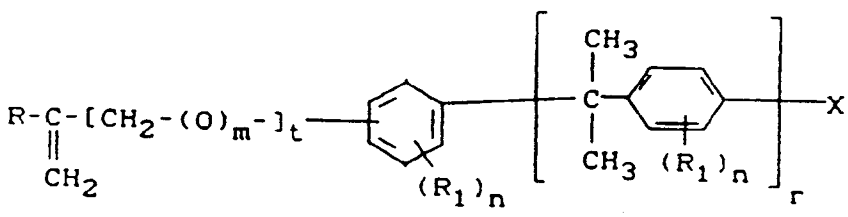 (I)

in which
R = H or $C_{1-4}$ alkyl,
$R^1$ = Cl, Br, $C_{1-4}$ alkyl, cyclohexyl or $C_{1-4}$ alkoxy,
m = 0 or 1,
n = 0, 1 or 2,
r = 0 or 1,
t = 0 or 1 and
X = $-O-Si(CH_3)_3$,
are copolymerized by radically initiated polymerization in known manner to a desired molecular weight (Mn, number average molecular weight) in the range from 10,000 to 40,000, after which the polymer is reacted as such, i.e. without isolation, with diphenols, phosgene and monophenols in aqueous-alkaline phase in the presence of an inert organic solvent under the conditions of the two-phase interfacial process, the quantity of diphenol being selected so that the content of polycarbonate chains in the grafted vinyl copolymer is between 65% and 45% by weight, based on the total weight of the grafted vinyl copolymer, including grafted-on polycarbonate chains, the quantity of chain terminator being gauged in such a way that the average chain length of the grafted-on polycarbonate side chains comprises between 35 and 70 recurring carbonate structural units and the quantity of inert organic solvents having to the gauged in such a way that the final viscosity of the organic phase of the reaction mixture is between 5 and 25 mPa.s.

2. Grafted vinyl copolymers obtainable by the process claimed in claim 1.

3. Grafted vinyl copolymers as claimed in claim 2, characterized in that they contain structural units corresponding to formula (IVa)

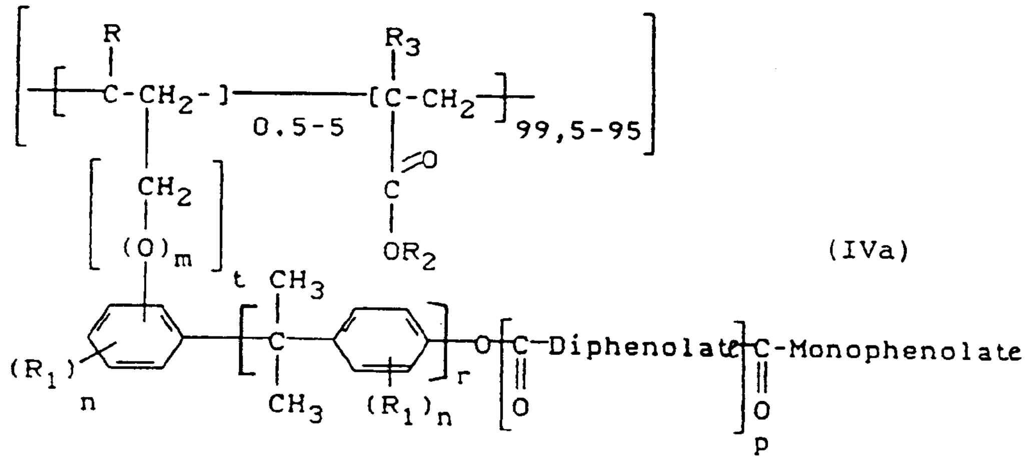

(IVa)

in which R, $R_1$, m, n, r and t are as defined for formula I in claim 1, p is an integer of 35 to 70 and diphenolate and monophenolate are residues formed by removal of the phenolic H atoms from diphenols and monophenols and in which $R_2$ is H, $C_{1-12}$ alkyl, $C_{5-6}$ cycloalkyl, $C_{9-15}$ aralkyl or $C_{9-15}$ alkaryl and $R_3$ is H or methyl.

**4.** The use of the grafted vinyl copolymers claimed in claims 2 and 3 as modifiers for thermoplastic polycarbonates.

**5.** Mixtures containing thermoplastic polycarbonates and the grafted vinyl copolymers claimed in claims 2 and 3.

**6.** Mixtures containing A) 99.5 to 70% by weight, of a thermoplastic, aromatic polycarbonate based on diphenols corresponding to formula (II)

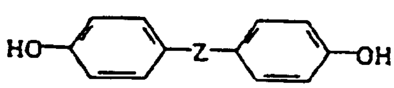

(II)

in which Z is a single bond, an alkylene radical containing 1 to 8 carbon atoms, an alkylidene radical containing 2 to 12 carbon atoms, a cyclohexylidene radical, a 3,3,5-trimethyl cyclohexylidene radical, a benzylidene radical, a methyl benzylidene radical, a bis-(phenyl)-methylene radical, -S-, $-SO_2-$, -CO- or -O-, having Mn's (weight average molecular weights as determined in known manner via the relative solution viscosity) in the range from 15,000 to 120,000, and
B) 0.5% by weight to 30% by weight, based on 100% by weight of A) + B), of the grafted vinyl copolymer obtainable in accordance with the invention claimed in claim 2.

**7.** A process for the production of the mixtures claimed in claims 5 and 6, characterized in that the polycarbonate component and the graft copolymer component are mixed above the softening temperature of the polycarbonate component used or solutions of the polycarbonate component are mixed with solutions of the graft copolymer component and the mixture subsequently freed from the solvent in known manner by evaporation.

**8.** A process for the production of the mixtures claimed in claims 5 and 6, characterized in that the polycarbonate component and the graft copolymer component are prepared together by the interfacial process from diphenols, phosgene and chain terminators in the presence of the desired quantity of graft base corresponding to formula (IV)

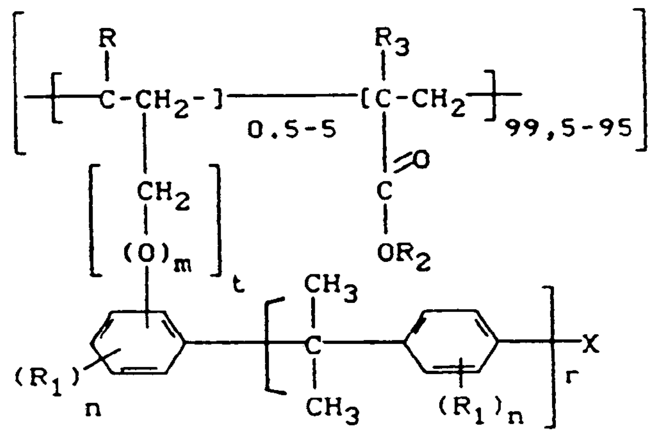

(IV)

in which
R, $R_1$, m, n, r, t and X are as as defined for formula (I) in claim 1 while $R_2$ = H, $C_{1-12}$ alkyl, $C_{5-6}$ cycloalkyl, $C_{9-15}$ arylalkyl or $C_{9-15}$ alkylaryl and $R_3$ is H or methyl, the molar ratio of the copolymerized compound of formula (I) in the graft base (IV) to monomeric conventional phenolic chain terminator having to be selected so that at least 50% of the quantity of chain terminator required to limit the growth of the polycarbonate chain to 35 to 70 recurring structural units

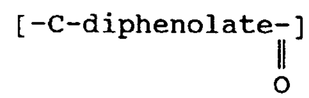

is of conventional type.

## Revendications

1. Procédé de préparation de copolymères vinyliques portant des chaînes de polycarbonates greffées, dont le support de greffage, le copolymère vinylique, présente une valeur de Mn (poids moléculaire moyen, moyenne en nombre, déterminé par chromatographie de perméation de gel) de 10 000 à 40 000 et dont les chaînes de polycarbonates ont un degré de polycondensation moyen en motifs de structure carbonates répétés de 35 à 70, avec des proportions relatives en poids de 35 % en poids : 65 % en poids à 55 % en poids : 45 % en poids entre le support de greffage, le copolymère vinylique, et les chaînes de polycarbonates greffées, caractérisé en ce que l'on copolymérise selon des modes opératoires connus, par polymérisation radicalaire, jusqu'au poids moléculaire voulu (Mn, poids moléculaire moyen, moyenne en nombre) de 10 000 à 40 000, 95 mol% à 99,5 mol% d'esters (méth)acryliques et 5 mol% à 0,5 mol% de composés de formule I

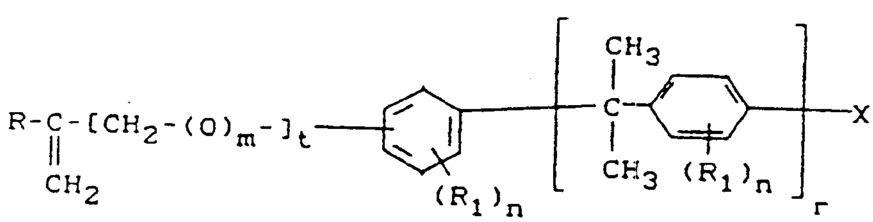

(I)

dans laquelle
R = H ou alkyle en $C_1$-$C_4$,
$R_1$ = Cl, Br, alkyle en $C_1$-$C_4$, cyclohexyle ou alcoxy en $C_1$-$C_4$,
m = 0 ou 1,

n = 0, 1 ou 2,
r = 0 ou 1,
t = 0 ou 1 et
X = -O-Si$(CH_3)_3$,
puis on fait réagir le polymère, sans l'isoler, avec des diphénols, du phosgène et des monophénols en phase aqueuse alcaline avec adjonction d'un solvant organique inerte dans les conditions du procédé à l'interface de deux phases, en choisissant la quantité de diphénols en sorte que la teneur en chaînes de polycarbonates du copolymère vinylique greffé représente de 65 à 45 % du poids total du copolymère vinylique greffé, y compris les chaînes de polycarbonates greffées, et on règle la quantité de coupeurs de chaînes en sorte que la longueur de chaîne moyenne des chaînes latérales de polycarbonates greffées représente dans chaque cas de 35 à 70 motifs de structure carbonates répétés, et l'on règle la quantité de solvant organique inerte en sorte que la viscosité finale de la phase organique du mélange de réaction se situe entre 5 et 25 mPa.s.

**2.** Copolymères vinyliques greffés obtenus par le procédé de la revendication 1.

**3.** Copolymères vinyliques greffés selon la revendication 2, caractérisés en ce qu'ils contiennent des motifs de structure de formule IVa

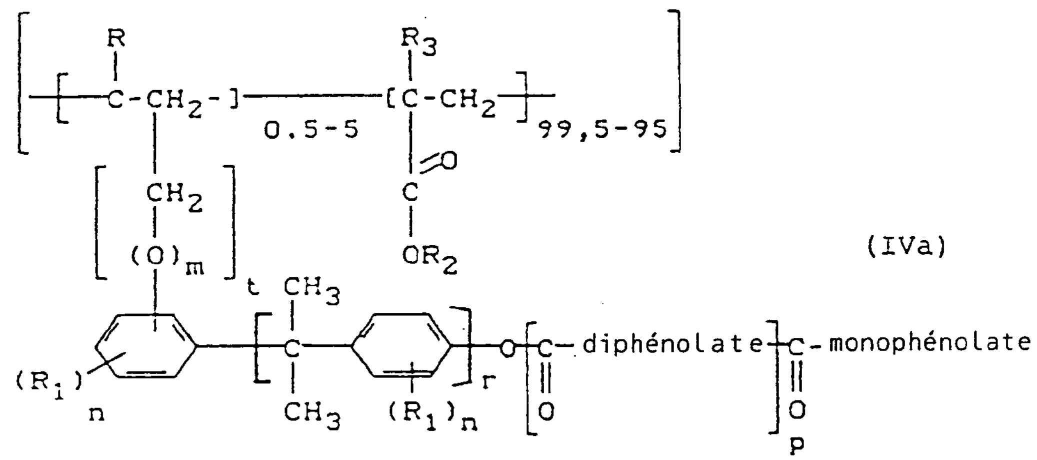

(IVa)

dans laquelle R, $R_1$, m, n, r et t ont les significations indiquées en référence à la formule I dans la revendication 1, p est un nombre entier allant de 35 à 70 et "diphénolate" et "monophénolate" désignent des radicaux obtenus par élimination des atomes d'hydrogène phénoliques de diphénols et monophénols respectivement, $R_2$ représentant H, un groupe alkyle en $C_1$-$C_{12}$, cycloalkyle en $C_5$-$C_6$, aralkyle en $C_9$-$C_{15}$ ou alkylaryle en $C_9$-$C_{15}$ et $R_3$=H ou un groupe méthyle.

**4.** Utilisation des copolymères greffés selon les revendications 2 et 3 en tant que modifiants pour des polycarbonates thermoplastiques.

**5.** Mélanges contenant des polycarbonates thermoplastiques et les copolymères vinyliques greffés des revendications 2 et 3.

**6.** Mélanges contenant
A) 99,5 à 70 % en poids d'un polycarbonate aromatique thermoplastique à base de diphénols de formule II

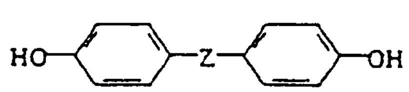

(II)

dans laquelle Z représente une liaison simple, un groupe alkylène en $C_1$-$C_8$, alkylidène en $C_2$-$C_{12}$, cyclohexylidène, 3,3,5-triméthylcyclohexylidène, benzylidène, méthylbenzylidène, bis-(phényl)-méthylène, -S-, -$SO_2$-, -CO- ou -O-, avec des valeurs de Mn (poids moléculaire moyen, moyenne en poids,

déterminé de manière connue par la viscosité relative en solution) de 15 000 à 120 000 et
B) 0,5 à 30 % en poids, pour 100 % en poids de A) + B), d'un copolymère vinylique greffé obtenu conformément à l'invention selon revendication 2.

7. Procédé de préparation des mélanges des revendications 5 et 6, caractérisé en ce que l'on mélange le composant polycarbonate et le composant copolymère greffé à une température supérieure à la température de ramollissement du composant polycarbonate, ou bien on mélange une solution du composant polycarbonate avec une solution du composant copolymère greffé puis on débarrasse le mélange du solvant par évaporation de manière connue en soi.

8. Procédé de préparation des mélanges des revendications 5 et 6, caractérisé en ce que l'on procède à la préparation du composant polycarbonate et à la préparation du composant copolymère greffé simultanément par le procédé connu à l'interface de phases à partir de diphénols, de phosgène et de coupeurs de chaînes en présence de la quantité voulue du support de greffage de formule IV

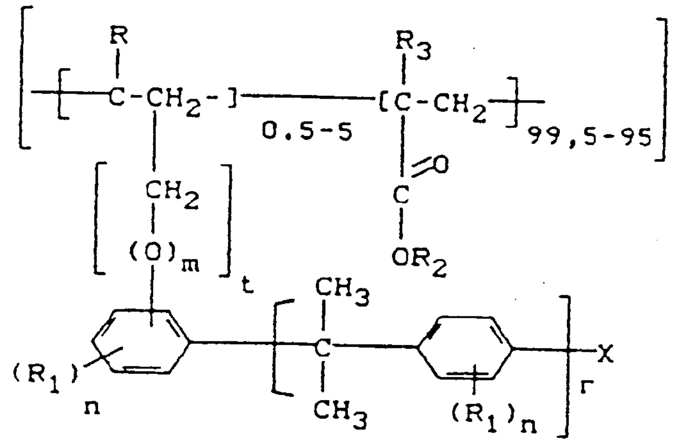

(IV)

dans laquelle
R, $R_1$, m, n, r, t et X ont les significations indiquées dans la revendication 1 en référence à la formule I, $R_2$ = H, alkyle en $C_1$-$C_{12}$, cycloalkyle en $C_5$-$C_6$, arylalkyle en $C_9$-$C_{15}$ ou alkylaryle en $C_9$-$C_{15}$ et $R_3$ représente H ou un groupe méthyle, le rapport molaire entre le composé de formule I à polymériser dans le support de greffage IV et le coupeur de chaînes phénolique monomère classique devant être choisi en sorte qu'au moins 50 % de la quantité de coupeurs de chaînes nécessaire pour limiter la croissance des chaînes de polycarbonates à 35 à 70 motifs de structure répétés

$$[-\underset{\underset{O}{\|}}{C}-\text{diphénolate}-]$$

consistent en coupeurs de chaînes de type classique.